(19) Europäisches Patentamt
European Patent Office
Office européen des brevets

(11) Veröffentlichungsnummer: **0 071 880**
**B1**

# (12) EUROPÄISCHE PATENTSCHRIFT

(45) Veröffentlichungstag der Patentschrift: **04.09.85**

(51) Int. Cl.[4]: **C 09 D 7/00**

(21) Anmeldenummer: **82106813.7**

(22) Anmeldetag: **28.07.82**

(54) **Lackhilfsmittel.**

(30) Priorität: **05.08.81 DE 3131007**

(43) Veröffentlichungstag der Anmeldung: **16.02.83 Patentblatt 83/7**

(45) Bekanntmachung des Hinweises auf die Patenterteilung: **04.09.85 Patentblatt 85/36**

(84) Benannte Vertragsstaaten: **AT BE CH DE FR GB IT LI NL**

(56) Entgegenhaltungen:
**GB - A - 1 602 187**
**US - A - 3 687 885**
**US - A - 4 097 437**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Gress, Wolfgang, Westfalenweg 247, D-5600 Wuppertal-Elberfeld (DE)**
Erfinder: **Bornmann, Hans, Am Falder 22, D-4000 Düsseldorf (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 071 880 B1

ACTORUM AG

**Beschreibung**

In Anstrichmitteln bzw. Lackiersystemen werden im weiten Umfange Verdickungsmittel bzw. Thixotropiermittel auf anorganischer Basis eingesetzt. Hierbei handelt es sich um bestimmte Schichtsilikate, insbesondere solche des Montmorillonittyps, die durch geeignete Vorbehandlung organophiliert worden sind. Bekannte Handelsprodukte dieser Art sind Bentonite oder Hectorite, denen durch Behandlung mit quartären Ammoniumsalzen organophile Eigenschaften verliehen worden sind. Die Einarbeitung solcher oleophilen Tone in Lackierungssysteme führt zur Eindickung, gegebenenfalls zur Thixotropierung und kann sowohl im Bereich der Einbrennlackierungen als auch üblicher Anstrichmittel, insbesondere auf Basis organischer Lösungsmittel erfolgen.

Organophilierte Silikatmaterialien der genannten Art quellen bei der Einarbeitung in organische Lösungsmittel enthaltende Systeme häufig in unkontrollierter Weise. Die Anstrichmitteltechnik hat sich daher daran gewöhnt, diese anorganischen Dikkungsmittel zunächst zu sogenannten Stammpasten aufzuarbeiten, die beschränkte Mengen des organophilierten Silikatmaterials — beispielsweise Mengen im Bereich von etwa 10 Gewichtsprozent — in organischen Lösungsmittelsystemen enthalten. Üblicherweise werden zur Herstellung dieser Stammpasten Dispergier- bzw. Emulgiermittel mitverwendet. Die Wahl des geeigneten Dispergier- bzw. Emulgiermittels hat entscheidende Bedeutung für die Beschaffenheit und Lagerbeständigkeit der Stammpaste, für ihre Weiterverarbeitbarkeit bei der Einarbeitung der Stammpasten in Anstrichmittelsysteme und schliesslich wirken sich diese Dispergier- bzw. Emulgierhilfsmittel der Stammpaste substantiell auch in der Beschaffenheit des Anstrichmittels bzw. den mit dem Anstrichmittel letztlich erhaltenen Lackschichten aus. In der Auswahl des richtigen Dispergier- bzw. Emulgierhilfsmittels bei der Zubereitung der Stammpaste liegt also ein entscheidender Verfahrensschritt der nicht nur wesentlichen Einfluss auf die Beschaffenheit der Stammpaste hat, sondern sich letztlich auch entscheidungserheblich im fertigen Anstrichmittel und in den damit erhaltenen Überzügen verkörpert.

Im Stand der Technik sind als Dispergier- bzw. Emulgiermittel der geschilderten Stammpasten organophilierter Montmorillonite in organischen Lösungsmittelsystemen beispielsweise Aminsalze von Fettsäuren zur Verwendung gekommen. So haben sich insbesondere Aminsalze von Fettsäuren höherer Kohlenstoffzahl bisher in der Praxis bewährt. Als salzbildende Amine sind dabei beispielsweise Talgfettamine oder entsprechende Amine höherer Kohlenstoffzahl zur Verwendung gekommen. Die hier erforderlichen Ausgangsmaterialien unterliegen teils gewissen Beschränkungen in der Zugänglichkeit — insbesondere gilt das für höhere Rübölfettsäuren — teilweise besteht aus Kostengesichtspunkten der Wunsch ihres Ersatzes.

Die Erfindung geht von der Aufgabe aus, wirkungsvolle Dispergier- bzw. Emulgierhilfsmittel zur Verfügung zu stellen, die in Stammpasten der geschilderten Art nicht nur zu einem guten Aufschluss der organophilierten Silikatmaterialien unter Ausbildung von Stammpasten befriedigender Beschaffenheit führen, sondern zusätzlich auch bei dem Einsatz dieser Stammpasten in Anstrichmittelsystemen befriedigende Eigenschaften sicherstellen und letztlich die gewünschten Anstriche hoher Qualität mitbedingen.

Der erfindungsgemässen Lehre liegt die Feststellung zugrunde, dass bestimmte alkoxylierte Derivate H-aktiver Verbindungen geeignete Dispergier- bzw. Emulgiermittel für Stammpasten der geschilderten Art sind und dass insbesondere dann gute Arbeitsergebnisse erhalten werden, wenn diese alkoxylierten Derivate zusammen mit gewissen Fettsäurealkanolamiden eingesetzt werden.

Gegenstand der Erfindung sind dementsprechend in einer ersten Ausführungsform ein Lackhilfsmittel in Form einer pastösen Dispersion eines anorganischen Gelbildners auf Basis organophilierter Schichtsilikate in organischen Lösungsmitteln mit einem Gehalt gelöster Dispergier- bzw. Emulgiermittel. Das Kennzeichen dieser neuen Lackhilfsmittel besteht darin, dass diese als Dispergier- bzw. Emulgiermittel alkoxylierte Derivate von Alkoholen mit 10 bis 40 C-Atomen, Fettsäuren mit 10 bis 40 C-Atomen bzw. Fettsäureamiden mit 10 bis 40 C-Atomen und/oder von Phenol bzw. einkernigen Alkylphenolen mit 1 bis 2 Hydroxylgruppen und 1 bis 2 Alkylresten mit bis zu 12 Kohlenstoffatomen enthalten.

In einer bevorzugten Ausführungsform der Erfindung liegen als Dispergier- bzw. Emulgiermittel Mischungen der genannten alkoxylierten Derivate — im folgenden auch als Komponente A bezeichnet — zusammen mit Alkanolamiden langkettiger Fettsäuren — im folgenden auch als Komponente B bezeichnet — vor.

Die alkoxylierte Komponente A kann sich von einer oder mehreren der folgender Grundverbindungen ableiten: ein- oder mehrwertige Alkohole, insbesondere ein- oder zweiwertige Alkohole mit wenigstens 10 Kohlenstoffatomen im Grundgerüst. Bevorzugt enthalten die Alkohole nicht mehr als etwa 40 Kohlenstoffatome, wobei besonders bevorzugt der Bereich von etwa 10 bis 24 C-Atomen ist. Die Alkohole können geradkettig oder verzweigt sein. Monofunktionelle Alkohole der angegebenen Art sind bevorzugt, mehrwertige Alkohole sind aber nicht ausgeschlossen. Geeignet können insbesondere entsprechende Diole sein, bei denen gegebenenfalls die Hydroxylgruppen in Vicinal-Stellung stehen. Die Hydroxylgruppen können — müssen aber nicht — endständig sein. Fettalkohole der genannten Art können ein besonders geeigneter Grundkörper für die Dispergier- bzw. Emulgierkomponenten gemäss A sein. Wesentlich ist für diesen Grundkörper und für die im folgenden anderen Grundkörper der Komponente A, dass ein hinreichend grosser oleophiler Rest vorliegt.

Neben den Alkoholen kommt als oleophiler Grundkörper Fettsäureamiden besondere Bedeutung zu, die ebenso wie die Alkohole alkoxyliert sind. Zur Definition der hier zugrunde liegenden Fettsäuren gelten die im Zusammenhang mit der Alkoholdefinition gemachten Angaben sinngemäss. Monocarbonsäuren mit wenigstens 10 C-Atomen, insbesondere

nicht mehr als etwa 40 C-Atomen und insbesondere Carbonsäuren mit etwa 10 bis 24 C-Atomen sind besonders geeignete oleophile Reste für die hier besprochenen Komponenten A. Der Begriff der Fettsäureamide erfasst nicht nur übliche alkoxylierbare bzw. alkoxylierte Fettsäureamide, insbesondere können hier Fettsäureamide mit Aminoalkoholen in Betracht kommen, die im Sinne der Komponente A alkoxyliert sind, während sie im nichtalkoxylierten Zustand unter die Definition der Komponente B fallen, wie zuvor angegeben.

Neben diesen Fettsäureamiden sind auch Fettsäuren selber als H-aktive Grundkomponenten für eine anschliessende Alkoxylierung geeignet, wenn auch im Rahmen der Erfindung weniger bevorzugt. Für die nähere Definition dieser Fettsäuren gelten die im Zusammenhang mit den langkettigen Alkoholen bzw. den langkettigen Fettsäureamiden gemachten Angaben sinngemäss.

Schliesslich sind ein geeigneter oleophiler Grundkörper für die alkoxylierten Derivate der Komponente A Phenole bzw. Alkylphenole.

Die alkoxylierten Komponenten A enthalten wenigstens einen Alkoxyrest, vorzugsweise jedoch eine Mehrzahl von in Polyetherbindung aneinander geknüpfte Alkoxyreste, die letztlich über das aktive Wasserstoffatom an den oleophilen Grundkörper der zuvor geschilderten Art angebunden sind. Bei hinreichend grossem oleophilen Grundkörper können beispielsweise bis zu 50, vorzugsweise nicht mehr als etwa 40 Alkoxygruppen enthaltende Polyetherreste als hydrophiler Bestandteil in die Komponente A eingebunden sein. In der Praxis werden häufig entsprechende Polyalkoxyetherreste mit 2 bis 25, insbesondere 2 bis 15 Alkoxygruppen vorliegen. Bevorzugt wird dabei darauf geachtet, dass ein ausgewogenes Verhältnis zwischen oleophilem und hydrophilem Bestandteil in der Komponente A gewährleistet ist. Überwiegt der hydrophile Polyalkoxybestandteil, dann sind die Komponenten A in organischen Lösungsmitteln nicht mehr gut verträglich und können Schwierigkeiten im Lacksystem bereiten. Bevorzugt kann es in diesem Sinne sein, Komponenten A mit HLB-Werten im Bereich von 6 bis 18 einzusetzen, wobei insbesondere ein Bereich von 6 bis 16, vor allem 9 bis 15 bevorzugt sein kann.

Als Komponente B werden erfindungsgemäss in den Dispergier- bzw. Emulgiermitteln Alkanolamide langkettiger Fettsäuren eingesetzt. Der Begriff der langkettigen Fettsäuren ist hier sinngemäss vergleichbar mit der Definition des entsprechenden Begriffs bei den Komponenten A definiert. Auch hier gilt also, dass die Fettsäuren mindestens etwa 10 C-Atome enthalten, wobei als bevorzugter Bereich etwa 10 bis 24 C-Atomen gelten. Die Fettsäuren sind hier mit Aminoalkoholen amidiert, wobei sowohl Monoalkanolamine als auch Dialkanolamine in Betracht kommen. Alkanolamine sind bevorzugt entsprechende Verbindungen mit niederen Alkanoylresten, die bevorzugt jeweils bis zu 5 Kohlenstoffatome enthalten können. Besonders wichtig sind in diesem Zusammenhang die entsprechenden Amide des Monoethanolamins oder Diethanolamins. Auch Polydiethanolamide sind bevorzugte Komponenten B im Sinne der Erfindung. Die Fettsäuren dieser Komponente B sind bevorzugt entsprechende Säuren bzw. Säuregemische des natürlich vorkommenden C-Zahlbereichs, beispielsweise Cocosfettsäurediethanolamid, Cocosfettsäuremonoethanolamid, Cocosfettsäurepolydiethanolamid bzw. die entsprechenden Ölsäureamid-Verbindungen.

Spezielle Beispiele für geeignete Komponenten A sind etwa Cocosfettsäuremonoethanolamid . 4 EO, $C_{12/14}$-Fettalkohol . 5 EO, Oleylcetylalkohol . 5 EO, Nonylphenol . 4 EO, Nonylphenol . 10 EO, Octylphenol . 40 EO, $C_{12/14}$-Fettsäure . 4 EO und ähnliche Komponenten. Ganz allgemein gilt, dass die Alkoxy- bzw. Polyalkoxyetherreste der Komponenten A sich bevorzugt von Ethylenoxyd ableiten, wenn auch andere Alkylenoxide, beispielsweise 1,2-Propylenoxid nicht ausgeschlossen sind.

Die Mischungsverhältnisse von Komponente A : B liegen zweckmässigerweise im Bereich von 5 : 1 bis 1 : 5, bevorzugt im Bereich von etwa 3 : 1 bis 1 : 3 — jeweils in Gewichtsteilen berechnet. Besonders gute Ergebnisse haben sich mit etwa gleichen Gewichtsmengen von A : B ergeben.

Die organophilierten Schichtsilikate, insbesondere die entsprechenden organophilen Bentonite bzw. Hectorite sind die einschlägigen Handelsprodukte, vergleiche hierzu beispielsweise Römpp's Chemielexikon 7. Auflage, 328 und 2217.

In den Stammpasten können als organische Flüssigphase rein aromatische Komponenten, beispielsweise Xylol, Toluol und dergleichen, rein aliphatischen Flüssigphasen wie Testbenzin oder deren Gemische vorliegen. Stammpasten der geschilderten Art, die neben ca. 10 Gewichtsprozent anorganischem Verdickungsmittel etwa 3 bis 10 Gewichtsprozent der erfindungsgemässen Dispergier- bzw. Emulgierhilfsmittel und zum Rest organische Flüssigphasen enthalten, bilden weiche, pump- oder sogar fliessfähige Pasten aus, die nicht zur Krustenbildung neigen, lange lagerfähig und leicht in Lacksysteme einarbeitbar sind. Trotz vergleichsweise niedrigviskosen Pasten entsteht im fertigen Lack kein Thixotropieverlust, der Dispergieraufwand ist gering. Die erfindungsgemässen Stammpasten können auch nachträglich, d.h. der bereits dispergierten Phase z.B. zum Zwecke der Viskositätskorrektur zugefügt werden. Die erfindungsgemässen Stammpasten zeichnen sich dadurch aus, dass sie auch bei längerer Lagerung keine oder keine wesentliche Synärese zeigen.

*Beispiel*

In den nachfolgenden Untersuchungen werden die Wirkungen einer Mehrzahl von Emulgier- bzw. Dispergierhilfsmitteln im Sinne der Erfindung durch Bestimmung von Testergebnissen ermittelt. In einer ersten Versuchsgruppe werden dabei insbesondere die Verdickungswirkung und die Pastenbeschaffenheit von Stammlösungen bestimmt, die neben einem aromatischen (Xylol) bzw. aliphatischen (Testbenzin) Lösungsmittel wechselnde Typen und wechselnde Mengen eines organophilierten Bentonits enthalten, der unter dem Handelsnamen «Bentone» in unterschiedlichen Qualitäten vertrieben wird. Es werden dabei die drei Typen «Bentone 27», «Bentone 34» und «Bentone 38» eingesetzt.

In einer ersten Versuchsserie werden Stammpasten aus 80 Gewichtsteilen (GT) des organischen Lösungsmittels, 10 GT des jeweiligen organophilierten Bentonits und 10 GT des erfindungsgemässen Hilfsmittels zur Dispergierung bzw. Emulgierung hergestellt. In einer zweiten Versuchsserie wird mit den gleichen Komponenten, jedoch in den folgenden unterschiedlichen Gewichtsverhältnissen gearbeitet: 87 GT organisches Lösungsmittel, 10 GT des jeweiligen organophilierten Bentonits und 3 GT erfindungsgemässes Hilfsmittel.

Zur Herstellung dieser Stammpasten werden in einer 250 ml-Einheitsweithalsflasche 80 bzw. 87 g des Lösungsmittels und 10 bzw. 3 g des erfindungsgemässen Dispergier- bzw. Emulgierhilfsmittels vorgelegt und dann jeweils 10 g des organophilierten Bentonits unter Verwendung eines Hochleistungsrührscheibengerätes (Dissolvertyp, Durchmesser der Mahlscheibe 4 cm) während 10 Minuten bei ca. 4000 UpM (= ca. 8 m/sec.) eindispergiert.

Die Beurteilung der entstandenen Gele bzw. Stammpasten erfolgte nach einer Ruhezeit von mindestens 24 Stunden gemäss dem folgenden Schlüssel:

| Lösungsmittel-abscheidung | Gelkonsistenz |
|---|---|
| 0 = keine | 0 = dünnflüssig |
| 1 = Spur | 1 = fliessfähig |
| 2 = gering | 2 = fliessfähig bei leichter Bewegung |
| 3 = mässig | 3 = fliessfähig bei starker Bewegung |
| | 4 = sturzfähig |

Als Dispergier- bzw. Emulgierhilfsmittel wurden dabei die folgenden Komponenten bzw. Komponentengemische 1 bis 10 geprüft.

| Hilfsmittel | HLB-Wert |
|---|---|
| 1. Kokosfettsäuremonoethanolamid . 4 EO | 11,9 |
| 2. Fettalkohol $C_{12/14}$ . 5 EO | 11,4 |
| 3. Oleylcetylalkohol . 5 EO | 9,5 |
| 4. Nonylphenol . 4 EO | 9,6 |
| 5. Nonylphenol . 10 EO | 13,5 |
| 6. Octylphenol . 40 EO | 18,0 |
| 7. Fettsäure $C_{12/14}$ . 4 EO | 11,1 |
| 8. Gemisch (1 : 1) aus Kokosfettsäurediethanolamid und Nonylphenol . 10 EO | |
| 9. Gemisch (1 : 1) aus Ölsäurediethanolamid und Nonylphenol . 4 EO | |
| 10. Gemisch (1 : 1) aus Kokosfettsäuremonoethanolamid . 4 EO und Fettalkohol $C_{12/14}$ . 5 EO | |

Die HLB-Werte der in den Hilfsmitteln 8 und 9 mitverwendeten Fettsäurediethanolamide sind die folgenden: Kokosfettsäurediethanolamid 8,2; Ölsäurediethanolamid 6,6.

Die Errechnung der HLB-Werte erfolgt dabei gemäss der Formel

$$HLB = \frac{\%\ \text{hydrophiler Anteil}}{5}$$

Vergleiche hierzu N. Schönfeldt «Grenzflächenaktive Ethylenoxidaddukte», Wissenschaftliche Verlagsgemeinschaft mbH Stuttgart 1976, Seite 209.

Die Zusammensetzung und Beurteilung der jeweiligen Produkte geht aus der folgenden Tabelle I hervor.

Tabelle I

Hilfsmittelzusatz : 10%

| Hilfs-mittel | Beurteilung und Zusammensetzung | | | | | |
|---|---|---|---|---|---|---|
| | 10 GT Hilfsmittel<br>10 GT Bentone 27<br>80 GT Xylol | | 10 GT Hilfsmittel<br>10 GT Bentone 34<br>80 GT Testbenzin | | 10 GT Hilfsmittel<br>10 GT Bentone 38<br>80 GT Testbenzin | |
| | Lösemittel-abscheidung | Gelkon-sistenz | Lösemittel-abscheidung | Gelkon-sistenz | Lösemittel-abscheidung | Gelkon-sistenz |
| 1 | 0 | 3 | 0 | 3 | 0 | 3 |
| 2 | — | — | 0 | 4 | — | — |
| 3 | — | — | 0 | 3 | — | — |
| 4 | — | — | 0 | 2 | — | — |
| 5 | — | — | 0 | 4 | — | — |
| 6 | — | — | 0 | 3 | — | — |
| 7 | — | — | 0 | 3 | — | — |
| 8 | 0 | 3 | 0 | 2 | 0 | 2 |
| 9 | — | — | 0 | 2 | — | — |
| 10 | — | — | 0 | 3 | — | — |

Mit den gleichen Emulgier- bzw. Dispergiermitteln, jedoch in der geringeren Zusatzmenge von 3 Gewichtsprozent zur Stammpaste werden die Ergebnisse erhalten, die in der folgenden Tabelle II zusammengefasst sind.

Tabelle II

Hilfsmittelzusatz : 3%

| Hilfsmittel | Beurteilung und Zusammensetzung | | | | | |
|---|---|---|---|---|---|---|
| | 3 GT Hilfsmittel<br>10 GT Bentone 27<br>87 GT Xylol | | 3 GT Hilfsmittel<br>10 GT Bentone 34<br>87 GT Testbenzin | | 3 GT Hilfsmittel<br>10 GT Bentone 38<br>87 GT Testbenzin | |
| | Lösemittelabscheidung | Gelkonsistenz | Lösemittelabscheidung | Gelkonsistenz | Lösemittelabscheidung | Gelkonsistenz |
| 1 | 2 | 2 | 0 | 2 | 1 | 2 |
| 7 | — | — | 2 | 0 | — | — |
| 8 | 0 | 2 | 0 | 2 | 0 | 2 |
| 9 | — | — | 0 | 2 | — | — |
| 10 | — | — | 0 | 2 | — | — |

In einem nachfolgenden Versuchsansatz wird die erfindungsgemässe Dispergier- bzw. Emulgierhilfsmittelmischung 8 in einem Alkydharzdecklack eingesetzt. Die Zusammensetzung des Lackes — ohne den erfindungsgemässen Zusatz — ist wie folgt gewählt.

Tabelle III

*Prüflack*

*Alkydharzdecklack, weiss*

| | | |
|---|---|---|
| 580 Gewichtsteile | | Mittelöliges Alkydharz, 48% Ölgehalt 55%ig in Testbenzin/Xylol |
| 315 | » | Titandioxid, Rutil |
| 6 | » | Calciumnaphthenat, 4% Ca |
| 3 | » | Kobaltnaphthenat, 6% Co |
| 5 | » | Bleinaphthenat, 24% Pb |
| 4 | » | Methylethylketoxim |
| 70 | » | Benzin, Kp: 145 - 200°C (= Testbenzin) |
| 17 | » | Xylol |
| 1000 Gewichtsteile | | |

Dieser Prüflack wird durch Vermischen der 2 Komponenten Dispergieransatz (Tabelle IV) und Auflacklösung (Tabelle V) erhalten.

Tabelle IV

*Dispergieransatz*

| | | |
|---|---|---|
| 200 Gewichtsteile | | Mittelöliges Alkydharz (s.o.) |
| 315 | » | Titandioxid, Rutil |
| 6 | » | Calciumnaphthenat, 4% Ca |
| 521 Gewichtsteile | | |

Tabelle V

*Auflacklösung*

| | | |
|---|---|---|
| 380 Gewichtsteile | | Mittelöliges Alkydharz (s.o.) |
| 3 | » | Kobaltnaphthenat, 6% Co |
| 5 | » | Bleinaphthenat, 24% Pb |
| 4 | » | Methylethylketoxim |
| 70 | » | Benzin, Kp: 145 - 200°C (= Testbenzin) |
| 17 | » | Xylol |
| 479 Gewichtsteile | | |

Zur Beurteilung des erfindungsgemässen Aufschlussmittels 8 werden in 521 GT dispergierter Mahlpaste (Kornfeinheit ca. 5 $\mu$m) 52 GT der ausgewählten Bentonepaste während 10 Minuten mit dem Dissolver eingearbeitet. Anschliessend wird unter Berücksichtigung der mit der Betonepaste eingebrachten Lösemittelmenge aufgelackt. Anschliessend wird mit 479 GT Auflacklösung versetzt. Die Beurteilung der so erhaltenen Lacksysteme erfolgt nach Lagerung über Nacht. Bestimmt werden dabei das Viskositätsverhalten (Brookfield-Viskosimeter, Typ LVT, Spindel 3). Es wird zunächst auf die möglichst kleinste Geschwindigkeit eingestellt. Der nach einer Minute abgelesene Wert wird als Viskositätserhöhung angenommen. Nun wird eine Minute bei der höchstmöglichen Geschwindigkeit geschert. Der nun erhaltene Wert kann als Mass für den Thixotropieabbau gewertet werden. Unmittelbar darauf wird wieder auf die ursprünglich niedrige Geschwindigkeit eingestellt. Der nach einer Minute ablesbare Wert dient als Mass für den Viskositätsaufbau.

Zur Bestimmung der Ablaufneigung des Anstrichmittels wird der Verlauf- und Ablaufprüfrakeltyp 419

der Fa. Erichsen GmbH & Co. (Hemer-Sundwig, BRD) eingesetzt. Mit der Ablaufrakel, die 10 Spalten von je 6,4 mm Breite und der Höhe von 75-100-125 usw. bis 300 μm enthält, werden auf einer Glasplatte 10 nebeneinenander liegende Filmstreifen gezogen und die Platten daraufhin sofort senkrecht aufgestellt. Die Spalten oder auch die gezogenen Filmstreifen werden in der Reihenfolge der Höhe bzw. der Dicke numeriert von 1 bis 10, wobei der niedrigste Spalt mit 1 und der höchste mit 10 bezeichnet wird. Als Ablaufindex benutzt man die Nummern des Filmstreifens, bei dem gerade noch kein Verlaufen mit dem nachfolgenden Streifen erfolgt. Je kleiner dieser Index ist, desto schlechter ist der Ablaufwiderstand des geprüften Materials.

Die ohne Zusatz und mit dem erfindungsgemässen Zusatz gemäss Ziffer 8 erhaltenen Ergebnisse sind in der folgenden Tabelle VI zusammengefasst.

Tabelle VI

Zusammensetzung der Aufschlüsse

Viskositätsverhalten der Prüflacke Brookfield LVT - 20°C

| Organophiler Montmorillonit | | Benzin Kp: 145-200°C | Hilfsmittel d. Erfindung | | Spindel | UpM-Messung | | | Pa.s-Messung | | | Ablaufindex |
|---|---|---|---|---|---|---|---|---|---|---|---|---|
| Bezeichnung | Gew.-% | Gew.-% (Testbenzin) | Bezeichnung Nr. | Gew.-% | | 1 | 2 | 3 | 1 | 2 | 3 | |
| ohne Zusatz | — | — | — | — | 3 | 6 | 30 | 6 | 1,8 | 1,8 | 1,8 | 5 |
| Bentone 34 | 10 | 87 | 8 | 3 | 3 | 6 | 30 | 6 | 2,1 | 2,0 | 2,1 | 8 |
| — » — | 10 | 80 | 8 | 10 | 3 | 6 | 30 | 6 | 2,8 | 2,4 | 2,9 | 8 |

**Patentansprüche**

1. Lackhilfsmittel in Form einer pastösen Dispersion eines anorganischen Gelbildners auf Basis organophilierter Schichtsilikate in organischen Lösungsmitteln mit einem Gehalt gelöster Dispergier- bzw. Emulgiermittel, dadurch gekennzeichnet, dass sie als Dispergier- bzw. Emulgiermittel alkoxylierte Derivate von Alkoholen mit 10 bis 40 C-Atomen, Fettsäuren mit 10 bis 40 C-Atomen bzw. Fettsäureamiden mit 10 bis 40 C-Atomen und/oder von Phenol bzw. einkernigen Alkylphenolen mit 1 bis 2 Hydroxylgruppen und 1 bis 2 Alkylresten mit bis zu 12 Kohlenstoffatomen enthalten.

2. Lackhilfsmittel nach Anspruch 1, dadurch gekennzeichnet, dass sie die alkoxylierten Derivate (Komponente A) zusammen mit Alkanolamiden von Fettsäuren mit 10 bis 40 C-Atomen (Komponente B) enthalten, wobei die Mischungsverhältnisse von A : B bevorzugt im Bereich von 5 : 1 bis 1 : 5, insbesondere im Bereich von 3 : 1 bis 1 : 3, liegen.

3. Lackhilfsmittel nach Ansprüchen 1 und 2, dadurch gekennzeichnet, dass die Alkohol-, und/oder Fettsäurereste der Komponente A und B 10 bis 24 C-Atome enthalten.

4. Lackhilfsmittel nach Ansprüchen 1 bis 3, dadurch gekennzeichnet, dass die alkoxylierten Derivate (A) 1 bis 40, vorzugsweise 2 bis 25 Alkoxygruppen in Polyetherbindung enthalten, wobei vorzugsweise entsprechende ethoxylierte Komponenten A vorliegen.

5. Lackhilfsmittel nach Ansprüchen 1 bis 4, dadurch gekennzeichnet, dass die Komponenten A HLB-Werte im Bereich von 6 bis 16 aufweisen.

6. Lackhilfsmittel nach Ansprüchen 1 bis 5, dadurch gekennzeichnet, dass sie als Schichtsilikat mit Verdickungswirkung oleophilierten Montmorillonit, insbesondere entsprechende Bentonite bzw. Hectorite enthalten.

7. Lackhilfsmittel nach Ansprüchen 1 bis 6, dadurch gekennzeichnet, dass sie etwa 10 Gewichtsprozent anorganischen Verdicker, etwa 3 bis 10 Gewichtsprozent Dispergier- bzw. Emulgiermittel und zum Rest aromatische und/oder aliphatische Lösungsmittel enthalten und dabei als pumpfähige Paste vorliegen.

8. Verwendung der Lackhilfsmittel nach Ansprüchen 1 bis 7 zur Verdickung und/oder Thixotropierung von Anstrichmitteln und Einbrennlacken.

**Claims**

1. Lacquer auxiliaries in the form of a pasty dispersion of an inorganic gelating agent based on organophilized layer silicates in organic solvents containing dissolved dispersants or emulsifiers, characterized in that they contain as dispersants or emulsifiers alkoxylated derivatives of $C_{10}$-$C_{40}$ alcohols, $C_{10}$-$C_{40}$ fatty acids or $C_{10}$-$C_{40}$ fatty acid amides and/or of phenol or mononuclear alkyl phenols containing from 1 to 2 hydroxyl groups and from 1 to 2 alkyl radicals containing up to 12 C-atoms.

2. Lacquer auxiliaries as claimed in claim 1, characterized in that they contain the alkoxylated derivatives (component A) together with alkanolamides of $C_{10}$-$C_{40}$ fatty acids (component B), the mixing ratio of A to B preferably being in the range from 5 : 1 to 1 : 5 and more preferably in the range from 3 : 1 to 1 : 3.

3. Lacquer auxiliaries as claimed in claims 1 and 2, characterized in that the alcohol and/or fatty acid residues of components A and B contain from 10 to 24 C-atoms.

4. Lacquer auxiliaries as claimed in claims 1 to 3, characterized in that the alkoxylated derivatives (A) contain from 1 to 40 and preferably from 2 to 25

alkoxy groups in polyether linkage, corresponding ethoxylated components A preferably being present.

5. Lacquer auxiliaries as claimed in claims 1 to 4, characterized in that the components A have HLB-values of from 6 to 16.

6. Lacquer auxiliaries as claimed in claims 1 to 5, characterized in that they contain oleophilized montmorillonite, more particularly corresponding bentonites or hectorites, as thickening layer silicate.

7. Lacquer auxiliaries as claimed in claims 1 to 6, characterized in that they contain approximately 10% by weight of inorganic thickener, approximately 3 to 10% by weight of dispersant or emulsifier and, for the rest, aromatic and/or aliphatic solvents and are in the form of a pumpable paste.

8. The use of the lacquer auxiliaries as claimed in claims 1 to 7 for thickening and/or thixotropizing paints and stoving lacquers.

**Revendications**

1. Adjuvants pour vernis sous forme d'une dispersion pâteuse d'un agent gélifiant inorganique à base de silicates stratifiés rendus organophiles dans des solvants organiques contenant des agents dispersants ou des agents émulsionnants dissous, caractérisés en ce que, comme agents dispersants ou agents émulsionnants, ils contiennent des dérivés alcoxylés d'alcools contenant 10 à 40 atomes de carbone, d'acides gras contenant 10 à 40 atomes de carbone ou d'amides d'acides gras contenant 10 à 40 atomes de carbone et/ou de phénol ou d'alkylphénols mononucléaires contenant un ou deux groupes hydroxy et un ou deux groupes alkyle et jusqu'à 12 atomes de carbone.

2. Adjuvants pour vernis selon la revendication 1, caractérisés en ce qu'ils contiennent les dérivés alcoxylés (composant A) conjointement avec des alcanolamides d'acides gras contenant 10 à 40 atomes de carbone (composant B), les rapports de mélange de A : B se situant, de préférence, dans l'intervalle de 5 : 1 à 1 : 5, en particulier, dans l'intervalle de 3 : 1 à 1 : 3.

3. Adjuvants pour vernis selon les revendications 1 et 2, caractérisés en ce que les radicaux alcool et/ou acide gras des composants A et B contiennent 10 à 24 atomes de carbone.

4. Adjuvants pour vernis selon les revendications 1 à 3, caractérisés en ce que les dérivés alcoxylés (A) contiennent 1 à 40, de préférence, 2 à 25 groupes alcoxy dans la liaison polyéther, des composants éthoxylés correspondants A étant, de préférence, présents.

5. Adjuvants pour vernis selon les revendications 1 à 4, caractérisés en ce que les composants A ont des valeurs d'équilibre hydrophile/lipophile se situant dans l'intervalle allant de 6 à 16.

6. Adjuvants pour vernis selon les revendications 1 à 5, caractérisés en ce que, comme silicate stratifié exerçant un effet d'épaississement, ils contiennent de la montmorillonite rendue oléophile, en particulier, de la bentonite ou de l'hectorite correspondante.

7. Adjuvants pour vernis selon les revendications 1 à 6, caractérisés en ce qu'ils contiennent environ 10% en poids d'un agent épaississant inorganique, environ 3 à 10% en poids d'un agent dispersant ou d'un agent émulsionnant, le reste étant constitué de solvants aromatiques et/ou aliphatiques, ces adjuvants se présentant sous forme d'une pâte apte au pompage.

8. Utilisation des adjuvants pour vernis selon les revendications 1 à 7, en vue d'épaissir et/ou de rendre thixotropes des peintures et des vernis au four.